# EUROPÄISCHE PATENTSCHRIFT

(11) **EP 4 002 240 B1**
(45) Veröffentlichungstag und Bekanntmachung des Hinweises auf die Patenterteilung: **01.11.2023**
(21) Anmeldenummer: 21198858.9
(22) Anmeldetag: 24.09.2021
(51) Int. Cl.: G06Q 10/0635, G06Q 50/04, G05B 9/02, F16P 3/14

(54) **VERFAHREN UND SYSTEM ZUR ERSTELLUNG EINER RISIKOBEURTEILUNG EINER MASCHINE**
METHOD AND SYSTEM FOR RISK ASSESSEMENT OF A MACHINE
PROCÉDÉ ET SYSTÈME POUR L'ÉVALUATION DES RISQUES D'UNE MACHINE

(30) Priorität: 12.11.2020 DE 102020129839
(43) Veröffentlichungstag der Anmeldung: 25.05.2022
(73) Patentinhaber: SICK AG, 79183 Waldkirch (DE)
(72) Erfinder: Albert, Magnus, 79104 Freiburg (DE); Mollbach, Erik, 56428 Dernbach (DE); Patrik, Feth, 79261 Gutach (DE)

(56) Entgegenhaltungen:
- DE-A1-102010 050 333
- DE-A1-102016 102 282
- DE-A1-102017 123 910

## Beschreibung

Die vorliegende Erfindung betrifft ein Verfahren gemäß Anspruch 1 und ein System gemäß Anspruch 5.

Für die Konstruktion und den Bau von Maschinen ist die Einhaltung von grundlegenden Sicherheitsanforderungen und Gesundheitsschutzanforderungen in Europa zwingend. Aus diesem Grund fordert die Maschinenrichtlinie 2006/42/EG vom Hersteller oder seines Bevollmächtigten eine Erstellung einer Risikobeurteilung.

Diese Forderung besteht aber nicht nur auf europäischer Ebene, sondern wird auch international gefordert und durch die Norm ISO 12100 konkretisiert. Die Norm ISO 12100 gibt allgemeine Gestaltungsgrundsätze sowie Begriffsdefinitionen an die Hand und beschreibt ein manuelles Verfahren zu einer Risikobeurteilung.

Somit ist eine Erstellung einer Risikobeurteilung essenziell und vor der eigentlichen Konstruktion und dem Bau der Maschine oder Anlage durchzuführen. Die Maschine kann erst dann unter Berücksichtigung der Ergebnisse der Risikobeurteilung konstruiert und gebaut werden.

Bei dem in der ISO 12100 durchgeführten iterativen Verfahren der Risikobeurteilung und Risikominderung wird wie folgt vorgegangen:
1. Grenzen der Maschine bestimmen
2. Risikoidentifikation
3. Risikoanalyse
4. Risikobewertung
5. Risikominderung

Trotz der genannten Norm ISO 12100 und bekannten normenkonformen Risikobeurteilungsmethoden ist eine Erstellung von Risikobeurteilungen heute immer noch ein weitestgehend manueller Prozess, der von Menschen durchgeführt wird und der sehr stark von der subjektiven Einschätzung aller am Prozess beteiligten Personen abhängt.

Ein zweiter wichtiger Punkt ist, dass neben einer unterschiedlichen Einstufung eines Risikos die Gefahr sehr groß ist, dass nicht alle Risiken/Gefährdungen wahrgenommen werden. Dies hat zur Folge, dass eine Maschine später in den Verkehr gebracht wird, die nur teilweise und somit unzureichende Risikominderungsmaßnahmen besitzt und letztendlich ein Risiko für alle beteiligten Personen in der späteren Nutzungsphase darstellt.

Weiter sind Softwarewerkzeuge bekannt, die bei der Erstellung einer Risikobeurteilung einem Anwender helfen sollen. Letztendlich unterstützen diese beim Prozess der Risikobeurteilung, helfen aber nicht bei der Analyse und Feststellung aller Risiken und deren Bewertung. Somit sind die Erstellung der Risikobeurteilung und die daraus resultierenden Maßnahmen stark vom Wissen einzelner Personen abhängig.

Die Hersteller, die Serienmaschinen bauen und die letztendlich immer eine sehr ähnliche Maschine bzw. Anlage in Verkehr bringen, können auf ihre jahrelange Erfahrung zurückgreifen und haben ggf. einen Informationsrückfluss aus dem produktiven Betrieb der Maschine bzw. Anlage beim Kunden und können diesen entsprechend in den Prozess der Risikobeurteilung einfließen lassen.

Hersteller von Einzelmaschinen oder Sondermaschinen haben solche Möglichkeiten nicht. Somit werden Risikobeurteilungen aufgrund von Annahmen erstellt ohne diese später durch reale Anwendungsdaten während der Laufzeit der Maschine zu validieren.

Dies kann in bestimmten Fällen schon während der Herstellung oder des Aufbaus der Maschine eintreten und zu einem Problem werden. Wird während des Baues der Maschine oder beim Aufbau vor Ort festgestellt, dass sich Vorbedingungen geändert haben und finden die durchgeführten Änderungen keinen Rückfluss in die Risikobeurteilung, finden die dadurch neu oder geänderten auftretenden Risiken keine Bewertung und es kann dadurch zu starken Abweichungen kommen. Risikobeurteilung und Maschine stimmen letztendlich nicht mehr überein und es sind neue Gefährdungen entstanden, die nicht bewertet worden sind und somit fehlt die ausreichende Risikominderung. Geänderte Vorbedingungen können beispielsweise dadurch entstehen, dass ein benötigter Raum für eine Absicherung nicht mehr zur Verfügung steht oder ein Arbeitsprozess sich geändert hat.

Ein weiteres Problem ergibt sich daraus, dass viele Hersteller auf recht einfach zu handhabende Methoden zurückgreifen, die sich relativ schnell im Unternehmen etablieren lassen. Der Nachteil dieser Methoden liegt meist darin, dass diese in den meisten Fällen das einzuschätzende Risiko entweder zu hoch oder zu niedrig bewerten, weil die Auswahl der zu beurteilenden Parameter auf ein Minimum beschränkt sind. Letztendlich wird deutlich, dass eine Einschätzung eines Risikos immer in einer starken Abhängigkeit der Person ist, die am Risikobeurteilungsprozess beteiligt ist und von der angewendeten Methode.

Neben den oben genannten bekannten Problemen verschärft sich die Situation durch neue Anforderungen auf dem Markt, die in letzter Zeit immer stärker zunimmt und mit den etablierten Prozessen und Methoden nicht oder nur unzureichend abzudecken ist. Es geht dabei um hochflexible Automatisierungslösungen und dynamische Fertigungslösungen, in denen sich Anlagekonstellationen permanent ändern können und müssen. Gerade im Kontext von Industrie 4.0 wird immer mehr nach solchen Systemen nachgefragt, die sich dynamisch an die Fertigung anpassen lassen und immer wieder neue Schnittstellen zu anderen Maschinen und untereinander bilden.

Mit den jetzigen Methoden und Prozessen trifft man auf folgende Schwierigkeiten: Bei jeder Änderung der Anlagenkonstellation muss mit großem Zeitaufwand manuell die Risikobeurteilung angepasst werden mit dem entsprechenden Dokumentationsaufwand. Der dafür benötigte Zeitaufwand steht im Gegensatz zur schnellen und dynamischen Fertigung, die benötigt wird. Flexibilität und Dynamik erfordern immer mehr neue Risikobetrachtungen.

Bei hochflexiblen Automatisierungslösungen und dynamischen Fertigungssystemen stößt man aber auch auf ein weiteres Problem. In den allgemeinen Grundsätzen der Maschinenrichtlinie wird gefordert, die Grenzen der Maschine zu bestimmen, was ihre bestimmungsgemäße Verwendung und jede vernünftigerweise vorhersehbare Fehlanwendung einschließt. Hier haben die meisten Hersteller oder Bevollmächtigten oftmals sehr starke Limitierungen bezüglich der Anwendung einfließen lassen, um natürlich für sich selbst Rechtssicherheit zu schaffen. Dies ist beim jetzigen Anspruch, dynamische und flexible Fertigungen zuzulassen, nicht mehr so einfach umsetzbar.

Die DE 10 2016 102 282 A1 offenbart ein Verfahren zum Überwachen einer Datenverarbeitung und -übertragung in einer Sicherheitskette eines Sicherheitssystems sowie eine Vorrichtung zur Durchführung des Verfahrens und löst die Aufgabe, die Überwachung der Sicherheitskette einer Gesamtsicherheitsfunktion eines modularen Sicherheitssystems insbesondere während des laufenden Betriebs weiter zur vereinfachen. Hierzu nutzt die DE 10 2016 102 282 A1 wenigstens einen Ist-Kennwert hinsichtlich eines sicherheitsrelevanten Kennzeichnungsattributes der Datenverarbeitung und/oder - übertragung.

Eine Aufgabe der Erfindung besteht darin, statt einer starren Risikobeurteilung eine verbesserte Risikobeurteilung bereitzustellen.

Die Aufgabe wird mittels eines Verfahrens gemäß Anspruch 1 und mittels eines Systems gemäß Anspruch 5 gelöst.

Im Folgenden werden Anwender oder Benutzer der Maschine und Personen als synonyme Begriffe benutzt.

Das System weisst einen Rechner mit einer Steuer- und Auswerteeinheit auf.

Bei dem Rechner kann es sich beispielsweise um einen Personalcomputer, einen Industriepersonalcomputer oder beispielsweise auch um einen Server handeln.

Gemäß der Erfindung wird eine dynamische Risikobeurteilung während der Konstruktion bzw. des Designs der Maschine und/oder während der Betriebszeit bzw. Laufzeit der Maschine durchgeführt.

Damit werden die Grenzen bzw. die Verwendungsgrenzen der Maschine variabel bzw. dynamisch festgelegt. Die variablen bzw. dynamischen Verwendungsgrenzen beziehen die bestimmungsgemäße Verwendung und die vernünftigerweise vorhersehbaren Fehlanwendungen mit ein.

Damit können flexible, dynamische und immer wieder wechselnde Schnittstellen von Maschinen und zwischen Maschinen realisiert werden.

Die zu berücksichtigenden Aspekte für die dynamischen Verwendungsgrenzen umfassen beispielsweise Folgendes:
A) Die verschiedenen Betriebsarten der Maschine und unterschiedlichen Eingriffsmöglichkeiten durch den Anwender, einschließlich solcher Eingriffe, die durch Fehlfunktionen der Maschine erforderlich werden.
B) Den Einsatzbereich der Maschine. Zum Beispiel in der Industrie oder im Gewerbe durch Personen mit unterschiedlichem Fähigkeiten.

Weiter können auch, zumindest eingeschränkt, beispielsweise die räumlichen Grenzen dynamisch angepasst werden. Die zu berücksichtigenden Aspekte räumlicher Grenzen umfassen
a) den Bewegungsraum;
b) den Platzbedarf von Personen, die mit der Maschine umgehen, z. B. während des Betriebs und der Instandhaltung;
c) Wechselwirkungen zwischen Mensch und Maschine, z. B. Schnittstelle "Mensch/Maschine", oder
d) die Schnittstelle "Maschine/Energieversorgung".

Das erfindungsgemäße System bzw. Verfahren ermöglicht eine formalisierte Erfassung von Anwendungsdaten und eine formalisierte Einstufung von Risikoparametern. Damit wird eine dynamische Bewertung der Risiken im Sinne einer Risikobeurteilung durchgeführt.

In einem ersten Schritt werden die notwendigen Daten und Anwendungsdaten von dem System gesammelt, erfasst bzw. eingelesen, um Risikobeurteilungen erstellen zu können.

In einem weiteren Schritt werden auf Basis der Daten und der Anwendungsdaten automatisiert Risikobeurteilungen erstellt.

Das System bzw. das Verfahren ermöglicht somit, zyklisch Risikominderungsmaßnahmen abzuleiten.

Weiterhin kann das System bzw. das Verfahren bestehende Risikominderungsmaßnahmen bewerten und feststellen, ob diese in einer geänderten Anlagenkonstellation als risikomindernde Maßnahme noch als ausreichend und angemessen zu betrachten sind oder neue angemessene Maßnahmen abzuleiten sind.

Die vorliegende Erfindung ermöglicht eine Formalisierung einer Risikobeurteilung aus gesammelten Daten, z. B. aus anderen oder ähnlichen Anwendungen bzw. Applikationen während einer Planungs- und Designphase sowie dem Datenrückfluss in das System während dem Betrieb bzw. der Laufzeit der Maschine.

Die Daten bzw. Informationen können beispielsweise von Rechnersystemen, übergeordneten Rechnersystemen, Steuerungssystemen, Sensoren und/oder Sensorsystemen sein.

Diese Daten können beispielsweise Automatisierungsdaten sowie sicherheitsgerichtete Daten sein.

Die Daten können beispielsweise als digitale Daten oder analoge Daten zur Verfügung stehen.

Sollte eine Gefahrenstelle, ein Gefahrenbereich oder eine Gefahrensituation erfasst werden, für die keine Daten vorhanden sind, wird diese über eine Funktion herausgelöst und zur manuellen Bearbeitung zur Verfügung gestellt. Die manuell bearbeiteten Risiken werden dann während einer Validierungsphase und während dem Betrieb der Maschine bzw. Anlage hinsichtlich der Annahmen geprüft und bei Abweichungen zu bereits bekannten Risiken entsprechend automatisch angepasst. Die neue Gefahrenstelle, der neue Gefahrenbereich, die neue Gefahrensituation und das neue Risiko stehen damit als weitere Information bzw. Daten in folgenden Beurteilungen zur Verfügung. Dadurch wird eine Reduktion der subjektiven Beurteilung und Bewertung auf Basis von realen Daten erzielt.

Über eine strukturierte Risikobeurteilung, ausgehend von der Norm ISO 12100 und einer Datenablage in einer entsprechenden Struktur ist es möglich, die getroffenen Annahmen, wie zum Beispiel ein Schadensausmaß und eine Eintrittswahrscheinlichkeit im laufenden Betrieb der Maschine oder Anlage zyklisch oder kontinuierlich zu überprüfen und Abweichungen zu bestimmen. Es kann eine zu starke oder zu schwache erste Beurteilung vorliegen und dann entsprechend den realen Betriebsbedingungen angepasst werden und bei der Konstruktion von gleichen oder ähnlichen Maschinen berücksichtigt werden.

Durch die strukturierte Datenablage bzw. Datenspeicherung kann beispielsweise auf folgende Daten zurückgegriffen werden:
- mindestens eine Produktionseinheit bzw. auch ein Maschinentyp; Es liegt eine genaue Beschreibung und eine genaue Definition der Produktionseinheit bzw. des Maschinentyps vor. Weiter sind in der Beschreibung Schlüsselwörter von Normen vorhanden und erleichtern somit die Zuordnung von Datensätzen.
- mindestens eine Gefahr der Produktionseinheit bzw. der Maschine; Es liegt eine genaue Beschreibung und eine genaue Definition der Gefahr der Produktionseinheit bzw. der Maschine vor. Weiter sind in der Beschreibung Schlüsselwörter von Normen vorhanden und erleichtern somit die Zuordnung von Datensätzen.
- mindestens eine Gefährdung durch eine potentielle Schadensquelle;
- mindestens ein Gefahrenereignis, das einen Schaden verursachen kann;
- mindestens eine Schnittstellengefahr;
- mindestens einen Ursprung der Gefahr;
- mindestens einen Gefahrenbereich; Ein Gefahrenbereich kann jeder Bereich in einer Maschine und/oder um eine Maschine herum sein, in dem eine Person einer Gefährdung ausgesetzt sein kann;
- mindestens eine potenzielle Konsequenz;
- ein Lebenszyklus oder mindestens ein Betriebsmodus;
- mindestens eine Gefährdungssituation, bei der eine Person mindestens einer Gefährdung ausgesetzt wäre;
- mindestens eine Betriebssituation.

Weiter kann beispielsweise mindestens eine Bewertung der Risikoparameter für jede einzelne Gefährdung an der Maschine während des kompletten Lebenszyklus vorliegen. Beispielsweise liegen folgende Bewertungen vor:
- eine mögliche physische Verletzung oder Gesundheitsschädigung, die aus der betrachteten Gefährdung resultieren kann;
- eine Anzahl von betroffenen Personen;
- eine Gefährdungsexposition mindestens einer Person;
- eine Wahrscheinlichkeit eines Gefährdungsereignisses;
- mindestens eine Möglichkeit zur Vermeidung oder Begrenzung eines Schadens;
- Fähigkeiten von Personen in Abhängigkeit von der Ausbildung.

Weiter liegen dann der Bewertung statistische Daten während der Laufzeit der Maschine zu Grunde und diese können dann zur Nachweispflicht herangezogen werden. Auf Basis dieser Daten kann dann bei ähnlichen Gefahrensituationen bei einer Neukonstruktion oder Änderung der Anlage bzw. Maschine zurückgegriffen werden und die Risikobeurteilung dynamisch erstellt und angepasst werden. Dies ermöglicht damit auch eine dynamische Änderung oder Anpassung bei sich veränderbaren Produktionsbedingungen bzw. Maschinenkonstellationen.

Durch die vorhandenen und sich immer wieder aktualisierenden Daten ist das System selbstständig in der Lage, Gefährdungen an Schnittstellen und durch neue Maschinenverbünde zu erkennen und Risikobeurteilungen automatisch an die tatsächlichen Umgebungsbedingungen anzupassen.

Ein Vorteil liegt in der dynamischen Erstellung von Risikobeurteilungen auf Basis von zuvor gesammelten Daten während der Projektierung und zusätzlich während der Laufzeit der Maschine bzw. Anlage zur Überprüfung der Annahmen durch Datenrückfluss und Vergleich während der Nutzung.

Somit liegt eine größere Sicherheit und eine größere Objektivität bzw. eine reduzierte Subjektivität vor durch die dynamische Risikobeurteilung auf Basis vorhandener Beurteilungsdaten aus gleichen oder ähnlichen Anwendungen bzw. Applikationen.

Weiter liegt eine vollautomatische Erstellung von Risikobeurteilungen vor und weniger Einflussnahme von subjektiven Einschätzungen.

Weiter erfolgt ein ständiger Datenrückfluss zur Validierung während der Laufzeit bzw. dem Betrieb der Maschine oder Anlage.

Dadurch sind ständige Veränderungen an der Maschine oder Anlage möglich, durch automatisierte Erstellung, Änderung und Anpassung von Risikobeurteilungen.

Die Risikobeurteilung umfasst beispielsweise eine Risikoanalyse, eine Risikoeinschätzung und eine Risikobewertung.

Die Risikoanalyse liefert Informationen, die zur Risikobewertung benötigt werden, mit deren Hilfe wiederum im System Entscheidungen dahingehend getroffen werden können, ob eine Risikominderung erforderlich ist. Diese Entscheidungen müssen beispielsweise durch eine qualitative oder, wo angemessen, eine quantitative Einschätzung des Risikos gestützt werden, das mit den durch die Maschine verursachten Gefährdungen verbunden ist.

Eine der wichtigsten Schritte bei jeder Risikobeurteilung einer Maschine besteht in der systematischen Identifizierung vernünftigerweise vorhersehbarer Gefährdungen, Gefährdungssituationen und/oder Gefährdungsereignisse in sämtlichen Phasen der Lebensdauer der Maschine. Beispielsweise dauerhaft vorhandene Gefährdungen und solche, die unerwartet auftreten können.

Maßnahmen zur Beseitigung der Gefährdungen oder zur Risikominderung können erst eingeleitet werden, wenn die Gefährdungen identifiziert wurden. Um diese Gefährdungsidentifizierung zu leisten, kann festgestellt werden, welche Arbeitsgänge durch die Maschine ausgeführt werden und welche Aufgaben durch Personen bzw. Anwender zu erfüllen sind, die mit der Maschine umgehen. Dabei sind die verschiedenen Teile, Mechanismen oder Funktionen der Maschine, gegebenenfalls die zu verarbeitenden Materialien und das Umfeld, in dem die Maschine eingesetzt werden kann, zu berücksichtigen.

Nach der Identifizierung der Gefährdungen ist für jede Gefährdungssituation eine Risikoeinschätzung durchzuführen, indem Risikoelemente bestimmt werden.

Die Risikoelemente sind beispielsweise ein a) Schadensausmaß oder b) die Eintrittswahrscheinlichkeit dieses Schadens als Funktion
1) der Gefährdungsexposition einer Person/von Personen,
2) des Eintritts eines Gefährdungsereignisses, sowie
3) der technischen und menschlichen Möglichkeiten zur Vermeidung oder Begrenzung des Schadens.

Das Schadensausmaß kann unter Berücksichtigung der folgenden Kriterien eingeschätzt werden:
a) dem Ausmaß der Verletzungen oder der Gesundheitsschädigung, zum Beispiel: (leicht, schwer, tödlich),
b) dem Schadensumfang, zum Beispiel: eine Person betroffen oder mehrere Personen betroffen.

Bei der Durchführung einer Risikobeurteilung kann für jede festgestellte Gefährdung das Risiko aus dem wahrscheinlichsten Ausmaß des durch diese Gefährdung verursachten Schadens berücksichtigt werden. Es kann jedoch auch das größte vorhersehbare Ausmaß des Schadens berücksichtigt werden, selbst wenn die Eintrittswahrscheinlichkeit eines Schadens solchen Ausmaßes nicht sehr groß ist.

Die Risikoeinschätzung kann alle Personen (Bedienpersonen und andere) berücksichtigen, für die vernünftigerweise vorhersehbar ist, dass diese den Gefährdungen ausgesetzt sein könnten.

Die Einschätzung jeder Gefährdungsexposition (einschließlich Langzeit-Gesundheitsschäden) erfordert eine Analyse aller Betriebsarten der Maschine und aller Arbeitsweisen und kann alle Betriebsarten und Arbeitsweisen berücksichtigen. Insbesondere kann die Analyse das Erfordernis eines Zugangs während Beladung/Entladung, Einrichtung, Einlernen (Teachen), Umrüstung oder Prozesskorrektur, Reinigung, Fehlersuche und Instandhaltung berücksichtigen. Die Risikoeinschätzung kann auch Aufgaben berücksichtigen, für die Schutzmaßnahmen zeitweilig aufgehoben werden müssen.

Die Risikoeinschätzung kann die Tauglichkeit von Schutzmaßnahmen berücksichtigen. Insbesondere kann die Tauglichkeit der Schutzmaßnahmen durch die Schutzeinrichtungen, die Sensoren oder das Sensorsystem berücksichtigt werden.

Diejenigen Bauteile und Systemteile von denen bekannt ist, dass diese bei einem Ausfall zur unmittelbaren Erhöhung des Risikos führen, verlangen bei der Risikoeinschätzung besondere Aufmerksamkeit. Sofern Schutzmaßnahmen die Arbeitsorganisation, korrekte Verhaltensweisen, die Aufmerksamkeit, die Verwendung einer persönlichen Schutzausrüstung, Fertigkeiten oder die Ausbildung umfassen, kann deren im Vergleich zu erprobten technischen Schutzmaßnahmen relativ geringe Zuverlässigkeit bei der Risikoeinschätzung mit berücksichtigt werden.

Für den dauerhaft sicheren Betrieb einer Maschine ist es wichtig, dass die Schutzmaßnahmen eine einfache Verwendung der Maschine zulassen und die bestimmungsgemäße Verwendung nicht beeinträchtigen. Andernfalls besteht eine Möglichkeit, dass Schutzmaßnahmen umgangen werden könnten, um die maximale Nutzbarkeit der Maschine zu erzielen. Die Risikoeinschätzung kann die Möglichkeit berücksichtigen, dass Schutzmaßnahmen wirkungslos gemacht oder umgangen werden können. Sie kann auch berücksichtigen, dass ein Anreiz bestehen kann, Schutzmaßnahmen wirkungslos zu machen oder zu umgehen.

Im Anschluss an die Risikoeinschätzung kann eine Risikobewertung durchgeführt werden. Falls eine Risikominderung notwendig ist, sind geeignete Schutzmaßnahmen auszuwählen und anzuwenden. Weiter wird bestimmt, ob die Risikominderung angemessen ist. Als Teil dieses Prozesses kann das System außerdem prüfen, ob durch die Anwendung neuer Schutzmaßnahmen zusätzliche Gefährdungen geschaffen oder andere Risiken erhöht werden.

Falls zusätzliche Gefährdungen auftreten, sind diese beispielsweise einer Liste der identifizierten Gefährdungen hinzuzufügen und geeignete Schutzmaßnahmen werden notwendig, um sich damit zu befassen.

Es ist beispielsweise eine hinreichende Risikominderung erreicht, wenn
- alle Betriebsbedingungen und alle Eingriffsmöglichkeiten berücksichtigt wurden,
- die Gefährdungen beseitigt oder die Risiken vermindert wurden, soweit dies umsetzbar ist,
- sämtliche neuen Gefährdungen, die aus ergriffenen Schutzmaßnahmen resultieren, in angemessener Weise berücksichtigt wurden,
- die Anwender über Restrisiken ausreichend informiert und gewarnt wurden,
- die durchgeführten Schutzmaßnahmen miteinander vereinbar sind,
- die Folgen ausreichend berücksichtigt wurden, die sich durch den Gebrauch einer für den gewerblichen/industriellen Einsatz konstruierten Maschine im nicht gewerblichen/nicht industriellen Bereich ergeben können, und
- die durchgeführten Schutzmaßnahmen die Arbeitsbedingungen der Bedienpersonen oder die Anwenderfreundlichkeit der Maschine nicht negativ beeinflussen.

Als Teil des Systems bzw. des Verfahrens der Risikobewertung können die Risiken, die mit einer Maschine oder Teilen davon verbunden sind, mit denen ähnlicher Maschinen oder Maschinenteile verglichen werden, falls die folgenden Kriterien erfüllt sind:
- die vergleichbare Maschine entspricht einer relevanten Typ-C-Norm;
- die bestimmungsgemäße Verwendung, die vernünftigerweise vorhersehbare Fehlanwendung und die Art der Konstruktion und Herstellung beider Maschinen sind vergleichbar;
- die Gefährdungen und Risikoelemente sind vergleichbar;
- die technischen Spezifikationen sind vergleichbar;
- die Einsatzbedingungen sind vergleichbar.

Das Ziel einer Risikominderung kann durch die Beseitigung der Gefährdungen erreicht werden oder durch getrennte oder gleichzeitige Minderung jedes der beiden Elemente, die das damit verbundene Risiko bestimmen:
- Schadensausmaß der betrachteten Gefährdung;
- Eintrittswahrscheinlichkeit dieses Schadens.

Alle Schutzmaßnahmen, die zum Erreichen dieses Ziels angewendet werden, sind beispielsweise in der folgenden, als "Drei-Stufen-Verfahren" bezeichneten Reihenfolge zu ergreifen.

### Schritt 1: Inhärent sichere Konstruktion

Inhärent sichere Konstruktion beseitigt Gefährdungen oder vermindert die damit verbundenen Risiken durch eine geeignete Auswahl von Konstruktionsmerkmalen der Maschine selbst und/oder Wechselwirkungen zwischen den gefährdeten Personen und der Maschine.

### Schritt 2: Technische Schutzmaßnahmen und/oder ergänzende Schutzmaßnahmen

Unter Berücksichtigung der bestimmungsgemäßen Verwendung und der vernünftigerweise vorhersehbaren Fehlanwendung können in geeigneter Weise ausgewählte technische und ergänzende Schutzmaßnahmen angewendet werden, um das Risiko zu mindern, wenn sich die Beseitigung einer Gefährdung als nicht durchführbar erweist oder das damit verbundene Risiko nicht in hinreichendem Maße durch eine inhärent sichere Konstruktion vermindert werden kann.

### Schritt 3: Anwenderinformation

Falls trotz inhärent sicherer Konstruktion und dem Einsatz technischer und ergänzender Schutzmaßnahmen Risiken verbleiben, kann die Anwenderinformation auf jegliche Restrisiken hinweisen. Die Anwenderinformation kann Folgendes enthalten, darf sich jedoch nicht darauf beschränken:
- Arbeitsverfahren, die beim Einsatz der Maschine anzuwenden sind und den erwarteten Fähigkeiten des Bedienpersonals und weiterer Personen entsprechen, die den von der Maschine ausgehenden Gefährdungen ausgesetzt sein können,
- die empfohlenen Verfahren für ein sicheres Arbeiten mit der Maschine und die entsprechenden Ausbildungsanforderungen, jeweils in angemessener Form beschrieben,
- ausreichend Angaben, einschließlich Warnhinweis hinsichtlich Restrisiken in den verschiedenen Lebensphasen der Maschine, und
- die Beschreibung jeder empfohlenen persönlichen Schutzausrüstung, einschließlich Einzelheiten zu deren Benutzung sowie der dafür erforderlichen Ausbildung.

Zum Schutz von Personen vor Gefährdungen, die durch eine inhärent sichere Konstruktion entweder nicht in angemessener Weise vermieden oder deren Risiken nicht ausreichend begrenzt werden können, können trennende und nichttrennende Schutzeinrichtungen angewendet werden. Es können ergänzende Schutzmaßnahmen getroffen werden, die zusätzliche Ausrüstungen (z. B. Einrichtungen zum Stillsetzen im Notfall) enthalten.

Im Folgenden werden die Komponenten Schutzeinrichtung, Sensor und Sensorsystem synonym verwendet und im Folgenden daher nur der Begriff Schutzeinrichtung stellvertretend für Sensor oder Sensorsystem verwendet.

Das System ist ausgebildet zur Auswahl und Anwendung von trennenden und nichttrennenden Schutzeinrichtungen, deren wesentlicher Zweck darin besteht, Personen gegen Gefährdungen zu schützen, die von sich bewegenden Teilen ausgehen, entsprechend deren Merkmalen und der Notwendigkeit des Zugangs zu dem (den) Gefährdungsbereich(en).

Die exakte Auswahl einer Schutzeinrichtung für eine bestimmte Maschine kann auf Grundlage der Risikobeurteilung für diese Maschine erfolgen. Bei der Auswahl einer geeigneten Schutzeinrichtung für eine bestimmte Maschinenart oder einen bestimmten Gefährdungsbereich kann das System berücksichtigen, dass eine feststehende trennende Schutzeinrichtung einfach ist und dort eingesetzt werden kann, wo bei normalem Maschinenbetrieb (Betrieb ohne jegliche Fehlfunktion) kein Zugang einer Bedienperson zum Gefährdungsbereich erforderlich ist.

Wenn häufigerer Zugang erforderlich wird, führt dies unweigerlich dazu, dass die feststehende trennende Schutzeinrichtung nicht wieder an ihrem Platz befestigt wird. Dies macht die Anwendung einer alternativen Schutzmaßnahme erforderlich, nämlich einer beweglichen verriegelten trennenden Schutzeinrichtung oder einer berührungslos wirkenden Schutzeinrichtung.

Manchmal kann eine Kombination verschiedener Schutzeinrichtungen erforderlich sein. Wenn z. B. zusammen mit einer feststehenden trennenden Schutzeinrichtung eine mechanische Zuführeinrichtung für die Zuführung eines Werkstücks in die Maschine eingesetzt wird und damit die Notwendigkeit des Zugangs zum Hauptgefährdungsbereich überflüssig wird, kann eine Schutzeinrichtung mit Annäherungsreaktion erforderlich werden, die vor einer sekundären Gefährdung durch Einziehen oder Scheren zwischen der mechanischen Zuführeinrichtung, falls erreichbar, und der feststehenden trennenden Schutzeinrichtung schützt.

Die Abgrenzungen von Steuerständen und Eingriffsbereichen sind zu berücksichtigen, um einen kombinierten Schutz gegen mehrere Gefährdungen zu bieten.

Ist bei normalem Betrieb der Maschine kein Zugang zum Gefährdungsbereich erforderlich, kann das System beispielsweise aus folgenden Schutzeinrichtungen auswählen:
a) feststehende trennende Schutzeinrichtungen;
b) verriegelte trennende Schutzeinrichtungen mit oder ohne Zuhaltung;
c) selbsttätig schließende trennende Schutzeinrichtungen;
d) sensitive Schutzeinrichtungen, z. B. elektrosensitive Schutzeinrichtungen oder druckempfindliche Schutzeinrichtungen.

Wenn der Zugang zum Gefährdungsbereich bei normalem Betrieb der Maschine erforderlich ist, kann das System beispielsweise aus folgenden Schutzeinrichtungen auswählen:
a) verriegelte trennende Schutzeinrichtungen mit oder ohne Zuhaltung;
b) sensitive Schutzeinrichtungen, z. B. elektrosensitive Schutzeinrichtungen;
c) einstellbare trennende Schutzeinrichtungen;
d) selbsttätig schließende trennende Schutzeinrichtungen;
e) Zweihandschaltungen;
f) trennende Schutzeinrichtungen mit Startfunktion (steuernde trennende Schutzeinrichtung).

Maschinen müssen möglichst so konstruiert sein, dass die zum Schutz der Bedienperson während der Produktion an der Maschine vorgesehenen Schutzeinrichtungen auch dem Personal Sicherheit bieten, welches das Einrichten, Einlernen, Umrüsten, die Fehlersuche, das Reinigen oder die Instandhaltung durchführt, ohne dieses bei der Erfüllung seiner Aufgabe zu behindern. Diese Aufgaben können identifiziert und bei der Risikobeurteilung als Teil der Verwendung der Maschine berücksichtigt werden.

Aufgrund der großen Vielfalt von Technologien mit ihren verschiedenen Erkennungsfunktionen sind sensitive Schutzeinrichtungen in sehr unterschiedlichem Maße für Sicherheitsanwendungen geeignet. Die folgenden Festlegungen zielen darauf ab, dem System Kriterien für die Auswahl der für jede Anwendung am meisten geeigneten Einrichtung(en) zur Verfügung zu stellen.

Zu den Bauarten von sensitiven Schutzeinrichtungen gehören z. B:
- Lichtschranken,
- Abtastvorrichtungen, wie z. B. Laserabtaster,

Sensitive Schutzeinrichtungen können für Folgendes verwendet werden:
- für die Annäherungsreaktion,
- für die Anwesenheitsmeldung,
- sowohl für Annäherungsreaktion als auch Anwesenheitsmeldung, oder
- zum erneuten Ingangsetzen einer Maschinenfunktion.

Sensitive Schutzeinrichtungen können in das Betriebsteil integriert und mit der Steuerung der Maschine verbunden sein, damit
- ein Steuerungsbefehl ausgelöst wird, sobald eine Person oder ein Körperteil erkannt wird,
- die gefährdenden Maschinenfunktionen nicht selbsttätig erneut in Gang gesetzt werden, wenn die erkannte Person oder der erkannte Körperteil den Erkennungsbereich verlässt, und deshalb der durch die sensitive Schutzeinrichtung ausgelöste Steuerungsbefehl von der Steuerung solange aufrechterhalten wird, bis ein neuer Steuerungsbefehl ausgelöst wird,
- das erneute in Gang setzen der gefährdenden Maschinenfunktionen das Ergebnis einer absichtlichen Betätigung einer Steuerungseinrichtung durch die Bedienperson ist, wobei die Steuerungseinrichtung außerhalb des Gefährdungsbereiches an einer Stelle angeordnet ist, von der aus die Bedienperson diesen Bereich überblicken kann;
- die Maschine nicht arbeiten kann, solange die Erkennungsfunktion der sensitiven Schutzeinrichtung unterbrochen ist, ausgenommen in "Sperrphasen", und
- die Lage und Form des Erkennungsfeldes, eventuell zusammen mit feststehenden trennenden Schutzeinrichtungen, verhindert, dass Personen oder Körperteile in einen Gefährdungsbereich hineingelangen oder sich darin befinden, ohne erkannt zu werden.

In Weiterbildung der Erfindung werden von dem System anwendbare Normen und/oder Vorschriften eingelesen und die automatische und dynamische Erstellung der Risikobeurteilung wird basierend auf den anwendbaren Normen und/oder Vorschriften durchgeführt.

Die Internationale Norm DIN EN ISO 12100 ist eine A-Norm und bildet die Grundlage für eine Normenreihe, die folgende Struktur besitzt:
- Typ-A-Normen (Sicherheitsgrundnormen) behandeln Grundbegriffe, Gestaltungsleitsätze und allgemeine Aspekte, die auf Maschinen angewandt werden können;
- Typ-B-Normen (Sicherheitsfachgrundnormen) behandeln einen Sicherheitsaspekt oder eine Art von Schutzeinrichtungen, die für eine ganze Reihe von Maschinen verwendet werden können;
- Typ-B1-Normen für bestimmte Sicherheitsaspekte (z. B. Sicherheitsabstände, Oberflächentemperatur, Lärm);
- Typ-B2-Normen für Schutzeinrichtungen (z. B. Zweihandschaltungen, Verriegelungseinrichtungen, druckempfindliche Schutzeinrichtungen, trennende Schutzeinrichtungen);
- Typ-C-Normen (Maschinensicherheitsnormen) behandeln detaillierte Sicherheitsanforderungen an eine bestimmte Maschine oder Gruppe von Maschinen.

Bei den anwendbaren Normen bzw. Vorschriften kann es sich beispielsweise um mindestens eine der im folgenden genannten Normen handeln:
ISO 447
ISO 2972
ISO 4413 siehe DIN EN ISO 4413
ISO 4414 siehe DIN EN ISO 4414
ISO 6385 siehe DIN EN ISO 6385
ISO 7000 siehe DIN ISO 7000
ISO 9355-1 siehe DIN EN 894-1
ISO 9355-3 siehe DIN EN 894-3
ISO 10075 siehe DIN EN ISO 10075-1
ISO 10075-2 siehe DIN EN ISO 10075-2
ISO/TR 11688-1 siehe DIN EN ISO 11688-1
ISO 11689 siehe DIN EN ISO 11689
ISO 13849-1 siehe DIN EN ISO 13849-1
ISO 13850 siehe DIN EN ISO 13850
ISO 13851 siehe DIN EN 574
ISO 13854 siehe DIN EN 349
ISO 13855 siehe DIN EN ISO 13855
ISO 13856 (alle Teile) siehe DIN EN 1760 (alle Teile)
ISO 13857 siehe DIN EN ISO 13857
ISO 14118 siehe DIN EN 10371)
ISO 14119 siehe DIN EN 1088
ISO 14120 siehe DIN EN 9532)
ISO 14122 (alle Teile) siehe DIN EN ISO 14122 (alle Teile)
ISO 14122-3 siehe DIN EN ISO 14122-3
ISO 14123-1 siehe DIN EN 626-1
ISO 14163 siehe DIN EN ISO 14163
ISO 15667 siehe DIN EN ISO 15667
ISO/IEC Guide 51 siehe DIN 820-120
IEC 60079-11 siehe DIN EN 60079-11
IEC 60204 (alle Teile) siehe DIN EN 60204 (alle Teile)
IEC 60204-1 siehe DIN EN 60204-1
IEC 60335-1 siehe DIN EN 60335-1
IEC 60745-1 siehe DIN EN 60745-1
IEC 60947-5-1 siehe DIN EN 60947-5-1
IEC 61000-6 (alle Teile) siehe DIN EN 61000-6 (alle Teile)
IEC 61029 (alle Teile) siehe DIN EN 61029 (alle Teile)
IEC 61310 (alle Teile) siehe DIN EN 61310 (alle Teile)
IEC 61496 (alle Teile) siehe DIN EN 61496-1, DIN CLC/TS 61496-2 und DIN CLC/TS 61496-3
IEC 61508 (alle Teile) siehe DIN EN 61508 (alle Teile)
IEC/TS 62046 siehe DIN CLC/TS 62046
IEC 62061 siehe DIN EN 62061
IEC 62079 siehe DIN EN 62079
IEC 60050-191 siehe IEV 191

In Weiterbildung der Erfindung werden von dem System Anwenderprofile der Anwender der Maschine mit deren Niveau im Hinblick auf Ausbildung, Erfahrung und Fähigkeiten in Bezug auf die Maschine eingelesen und die automatische und dynamische Erstellung der Risikobeurteilung erfolgt basierend auf den Anwenderprofilen.

Beispielsweise können folgende Anwenderprofile vorliegen:
- Bedienperson
- Einrichtungsperson
- Instandhaltungsperson
- Prüfperson

Die Anwenderprofile berücksichtigen das vorausgesetzte Niveau des Anwenders im Hinblick auf Ausbildung, Erfahrungen oder Fähigkeiten.

In Weiterbildung der Erfindung sind die Eingangsdaten für das System formalisiert und die Eingangsdaten sind mittels formaler oder semi-formaler Sprachen codiert und das System ist ausgebildet die Eingangsdaten einzulesen.

Damit liegen die Eingangsdaten in maschinenlesbarer Form vor. Damit kann die Risikobeurteilung teilautomatisiert oder vollautomatisiert erstellt werden.

Beispielsweise liegen die Daten in der Sprache UML (Unified Modeling Language) vor.

UML ist eine vereinheitlichte Modellierungssprache. UML ist eine grafische Modellierungssprache zur Spezifikation, Konstruktion, Dokumentation und Visualisierung von Software-Teilen und anderen Systemen. UML ist in der Norm ISO/IEC 19505 genormt. Im Sinne einer Sprache definiert UML dabei Bezeichner für die meisten bei einer Modellierung wichtigen Begriffe und legt mögliche Beziehungen zwischen diesen Begriffen fest. UML definiert weiter grafische Notationen für diese Begriffe und für Modelle statischer Strukturen und dynamischer Abläufe, die man mit diesen Begriffen formulieren kann.

Die grafische Notation ist jedoch nur ein Aspekt, der durch UML geregelt wird. UML legt in erster Linie fest, mit welchen Begriffen und welchen Beziehungen zwischen diesen Begriffen sogenannte Modelle spezifiziert werden - Diagramme in UML zeigen nur eine graphische Sicht auf Ausschnitte dieser Modelle. UML schlägt weiter ein Format vor, in dem Modelle und Diagramme zwischen Werkzeugen ausgetauscht werden können.

In Weiterbildung der Erfindung weist das System mindestens eine Datenbank für Maschinenkennwerte, Maschinenbeschreibungen und Anwendungsdaten der Maschine auf, mindestens eine Datenbank für Sensorkennwerte, Sensorbeschreibungen und Anwendungsdaten des Sensors bzw. der Schutzeinrichtung auf und mindestens eine Datenbank für Anwendungsdaten und Anwendungsbeschreibungen einer Anwendung für die Maschine auf.

In Weiterbildung der Erfindung werden Risikominderungsmaßnahmen zyklisch erfasst und überprüft und die Risikominderungsmaßnahmen werden zyklisch angepasst.

Folgende Faktoren werden dabei von dem System berücksichtigt:
- Sicherheit der Maschine zu allen Zeitpunkten
- Fähigkeit der Maschine, ihre Funktion auszuführen

Die Risikominderung erfolgt beispielsweise durch
- inhärent sichere Konstruktion
- sicheren Betrieb der Aktoren (kraftbegrenzt, geschwindigkeitsbegrenzt)
- technische Schutzmaßnahmen/Einbeziehung ergänzender Schutzmaßnahmen
- Anwenderinformation

Das System kann sich dynamisch an eine Fertigung anpassen und ggf. mit neuen Schnittstellen zu anderen Maschinen verbunden werden.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: ein erstes System mit mindestens einer Maschine und mindestens einer Schutzeinrichtung bzw. einem Sensor zur sicherheitsgerichteten Absicherung der Maschine;
- Figur 2: ein zweites System mit mindestens einer Maschine und mindestens einer Schutzeinrichtung bzw. einem Sensor zur sicherheitsgerichteten Absicherung der Maschine;

In den nachfolgenden Figuren sind identische Teile mit identischen Bezugszeichen versehen.

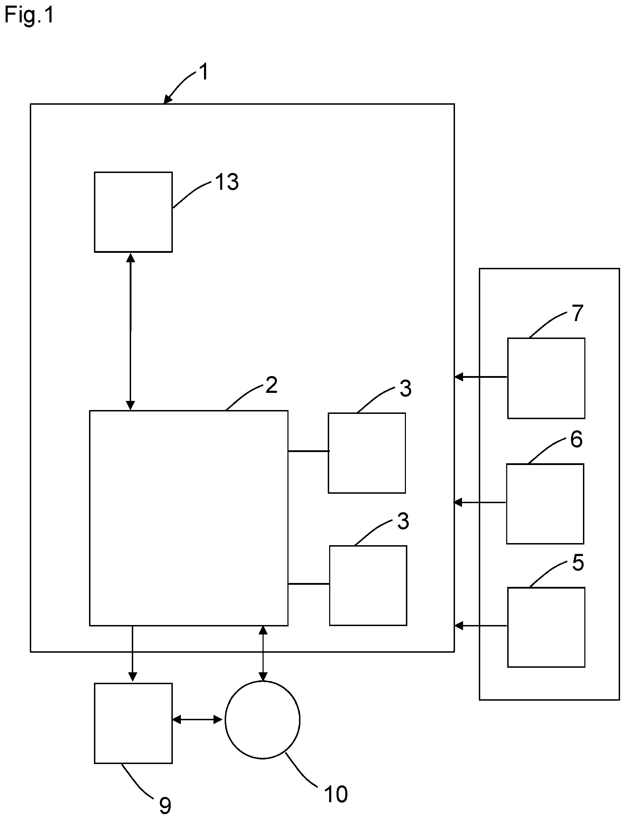

Figur 1 zeigt ein System 1 mit mindestens einer Maschine 2 und mindestens einer Schutzeinrichtung, einem Sensor 3 oder Sensorsystem zur sicherheitsgerichteten Absicherung der Maschine 2,
wobei das System 1 folgende Schritte durchführt,
- Zyklisches Einlesen und Erfassen von Maschinenkennwerten und Maschinenbeschreibungen 5 der Maschine 2,
- Zyklisches Einlesen und Erfassen von Schutzreinrichtungskennwerten, Schutzeinrichtungsbeschreibungen, Sensorkennwerten, Sensorbeschreibungen 6 und Anwendungsdaten der Schutzeinrichtung, des Sensors 3 oder des Sensorsystems,
- Zyklisches Einlesen von Anwendungsdaten und Anwendungsbeschreibungen 7 einer Anwendung für die Maschine 2,
- Identifizieren von Gefährdungen 9, welche von der Maschine 2 ausgehen und Identifizierung zugehöriger Gefährdungssituationen an der jeweiligen Maschine 2,
- wobei eine Risikobewertung und eine Risikobeurteilung 13 für einen Anwender 10 der Maschine zyklisch von dem System 1 durchgeführt wird und Entscheidungen über eine Notwendigkeit einer Risikominimierung zyklisch getroffen werden, wodurch das System 1 zur automatischen und dynamischen Erstellung einer Risikobeurteilung 13 der mindestens einer Maschine 2 ausgebildet ist.

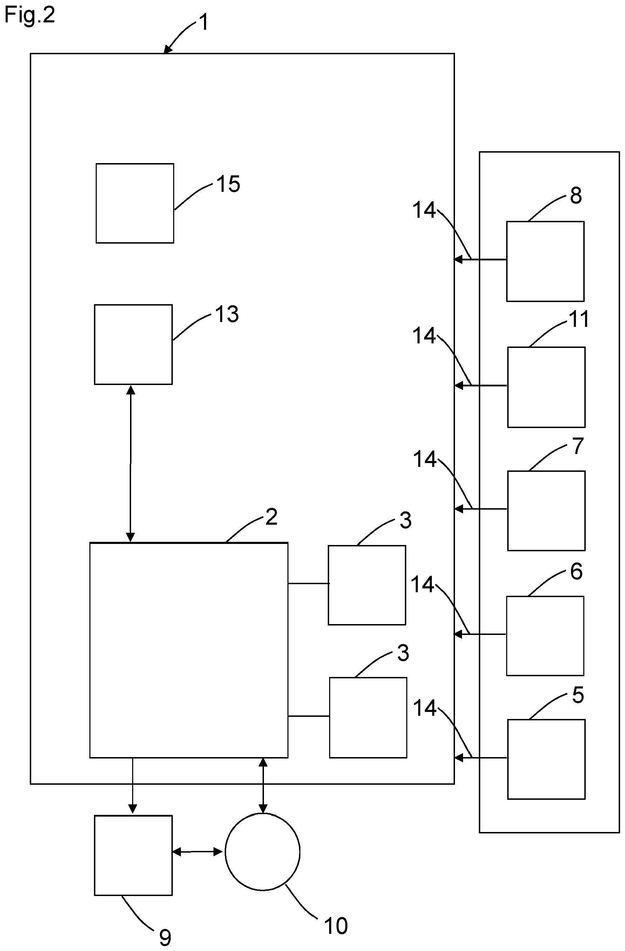

Figur 2 zeigt ein System gemäß Figur 1. Gemäß Figur 2 werden anwendbare Normen 11 bzw. Vorschriften eingelesen und die automatische und dynamische Erstellung der Risikobeurteilung 13 wird weiter basierend auf den anwendbaren Normen 11 bzw. Vorschriften durchgeführt.

Gemäß Figur 2 werden Anwenderprofile 8 der Anwender 10 bzw. Anwender der Maschine mit deren Niveau im Hinblick auf Ausbildung, Erfahrung und Fähigkeiten in Bezug auf die Maschine 2 eingelesen und die automatische und dynamische Erstellung der Risikobeurteilung erfolgt basierend auf den Anwenderprofilen 8.

Gemäß Figur 2 sind Eingangsdaten für das System formalisiert und die Eingangsdaten sind mittels formaler oder semi-formaler Sprachen codiert und das System ist ausgebildet die Eingangsdaten einzulesen.

Gemäß Figur 2 weist das System mindestens eine Datenbank 15 für Maschinenkennwerte, Maschinenbeschreibungen 5 und Anwendungsdaten der Maschine 2 auf, mindestens eine Datenbank 15 für Sensorkennwerte, Sensorbeschreibungen 6 und Anwendungsdaten des Sensors und mindestens eine Datenbank 15 für Anwendungsdaten und Anwendungsbeschreibungen 7 einer Anwendung für die Maschine 2 auf.

Gemäß Figur 2 werden die Risikominderungsmaßnahmen zyklisch erfasst und überprüft und die Risikominderungsmaßnahmen werden zyklisch angepasst.

Bezugszeichen:
1 System
2 Maschine
3 Sensor
5 Maschinenbeschreibungen
6 Sensorbeschreibungen
7 Anwendungsbeschreibungen
8 Anwenderprofile
9 Gefährdungen
10 Person/Anwender/Benutzer
11 Normen/Vorschriften
13 Risikobeurteilung
14 Eingangsdaten
15 Datenbank

## Patentansprüche

1. Verfahren zur Risikobeurteilung mittels eines Systems (1) mit mindestens einer Maschine (2) und mindestens einer Schutzeinrichtung, einem Sensor (3) oder Sensorsystem zur sicherheitsgerichteten Absicherung der Maschine (2),
wobei das System (1) folgende Schritte durchführt,
- Zyklisches Einlesen und Erfassen von Maschinenkennwerten und Maschinenbeschreibungen (5) der Maschine (2),
- Zyklisches Einlesen und Erfassen von Schutzeinrichtungskennwerten, Schutzeinrichtungsbeschreibungen, Sensorkennwerten, Sensorbeschreibungen (6) und Anwendungsdaten der Schutzeinrichtung, des Sensors (3) oder des Sensorsystems,
- Zyklisches Einlesen von Anwendungsdaten und Anwendungsbeschreibungen (7) einer Anwendung für die Maschine (2),
- Identifizieren von Gefährdungen (9), welche von der Maschine (2) ausgehen und Identifizierung zugehöriger Gefährdungssituationen an der jeweiligen Maschine (2),
- wobei eine Risikobewertung und eine Risikobeurteilung (13) für einen Anwender (10) der Maschine zyklisch von dem System (1) durchgeführt wird und Entscheidungen über eine Notwendigkeit einer Risikominimierung zyklisch getroffen werden, **dadurch gekennzeichnet, dass** das System (1) zur automatischen und dynamischen Erstellung einer Risikobeurteilung (13) der mindestens einer Maschine (2) ausgebildet ist, wobei anwendbare Normen (11) und/oder Vorschriften eingelesen werden und die automatische und dynamische Erstellung der Risikobeurteilung (13) basierend auf den anwendbaren Normen (11) und Vorschriften durchgeführt wird, wobei das System (1) mindestens eine Datenbank (15) für Maschinenkennwerte, Maschinenbeschreibungen (5) und Anwendungsdaten der Maschine (2) aufweist, mindestens eine Datenbank (15) für Sensorkennwerte, Sensorbeschreibungen (6) und Anwendungsdaten des Sensors (3) aufweist und mindestens eine Datenbank (15) für Anwendungsdaten und Anwendungsbeschreibungen (7) einer Anwendung für die Maschine (2) aufweist.

2. Verfahren nach Anspruch 1, **dadurch gekennzeichnet, dass** Anwenderprofile (8) der Anwender der Maschine mit deren Niveau im Hinblick auf Ausbildung, Erfahrung und Fähigkeiten in Bezug auf die Maschine (2) eingelesen werden und die automatische und dynamische Erstellung der Risikobeurteilung (13) basierend auf den Anwenderprofilen (8) erfolgt.

3. Verfahren nach mindestens einem der vorhergehenden Ansprüche 1 bis 2,
**dadurch gekennzeichnet, dass** Eingangsdaten (14) für das System (1) formalisiert sind und die Eingangsdaten (14) mittels formaler oder semi-formaler Sprachen codiert sind und das System (1) ausgebildet ist, die Eingangsdaten (14) einzulesen.

4. Verfahren nach mindestens einem der vorhergehenden Ansprüche 1 bis 3,
**dadurch gekennzeichnet, dass** Risikominderungsmaßnahmen zyklisch erfasst und überprüft werden und die Risikominderungsmaßnahmen zyklisch angepasst werden.

5. System (1) mit umfassend mindestens einer Maschine (2) und mindestens einer Schutzeinrichtung, einen Sensor (3) oder Sensorsystem zur sicherheitsgerichteten Absicherung der Maschine (2),
wobei das System (1) zur Ausführung des Verfahrens nach einem der vorhergehenden Ansprüche 1 bis 4 eingerichtet ist.

## Claims

1. A method for risk assessment by means of a system (1) having at least one machine (2) and at least one piece of protective equipment, a sensor (3) or a sensor system for the safety related safeguarding of the machine (2),
wherein the system (1) carries out the following steps:
- cyclic reading and detecting of machine characteristics and machine descriptions (5) of the machine (2);
- cyclic reading and detecting of protective equipment characteristics, protective equipment descriptions, sensor characteristics, sensor descriptions (6) and application data of the protective equipment, of the sensor (3), or of the sensor system;
- cyclic reading of application data and application descriptions (7) of an application for the machine (2);
- identifying hazards emanating from the machine (2) and identifying associated hazard situations at the respective machine (2),
- wherein a risk evaluation and a risk assessment (13) is cyclically carried out by the system (1) for a user (10) of the machine and decisions are cyclically made on a necessity for a risk minimization, **characterized in that** the system (1) is configured for an automatic and dynamic preparation of a risk assessment (13) of the at least one machine (2), with applicable standards (11) and/or specifications being read and the automatic and dynamic preparation of the risk assessment (13) being carried out on the basis of the applicable standards (11) and specifications, with the system (1) having at least one database (15) for machine characteristics, machine descriptions (5), and application data of the machine (2), having at least one database for sensor characteristics, sensor descriptions (6), and application data of the sensor (3), and having at least one database for application data and application descriptions (7) of an application for the machine (2).

2. A method in accordance with claim 1, **characterized in that** user profiles (8) of the users of the machine are read together with their level with respect to training, experience, and skills relating to the machine (2) and the automatic and dynamic preparation of the risk assessment (13) takes place on the basis of the user profiles (8)

3. A method in accordance with at least one of the preceding claims 1 to 2, **characterized in that** input data (14) for the system (1) are formalized and the input data (14) are encoded by means of formal or semiformal languages and the system (1) is configured to read the input data (14).

4. A method in accordance with at least one of the preceding claims 1 to 3, **characterized in that** risk reduction measures are cyclically detected and checked and the risk reduction measures are cyclically adapted.

5. A system (1) comprising at least one machine (2) and at least one piece of protective equipment, a sensor (3) or a sensor system for the safety related safeguarding of the machine (2),
wherein the system (1) is configured to carry out the method in accordance with one of the preceding claims 1 to 4.

## Revendications

1. Procédé d'appréciation des risques au moyen d'un système (1) comportant au moins une machine (2) et au moins un dispositif de protection, un capteur (3) ou un système capteur pour la sécurisation de la machine (2) en termes de sécurité,
le système (1) exécutant les étapes suivantes consistant à :
- lire et saisir cycliquement des valeurs caractéristiques de machine et des descriptions de machine (5) de la machine (2),
- lire et saisir cycliquement des valeurs caractéristiques du dispositif de protection, des descriptions du dispositif de protection, des valeurs caractéristiques du capteur, des descriptions de capteur (6) et des données d'application du dispositif de protection, du capteur (3) ou du système capteur,
- lire cycliquement des données d'application et des descriptions d'application (7) d'une application pour la machine (2),
- identifier des dangers (9) émanant de la machine (2) et identifier des situations dangereuses correspondantes sur la machine respective (2),
- une évaluation des risques et une appréciation des risques (13) étant effectuées cycliquement par le système pour un utilisateur (10) de la machine (1), et des décisions concernant une nécessité de minimisation des risques étant prises cycliquement,
**caractérisé en ce que** le système (1) est conçu pour l'établissement automatique et dynamique d'une appréciation des risques (13) de ladite au moins une machine (2), des normes (11) et/ou des prescriptions applicables étant lues et l'établissement automatique et dynamique de l'appréciation des risques (13) étant effectué sur la base des normes (11) et des prescriptions applicables, le système (1) comprenant au moins une banque de données (15) pour les valeurs caractéristiques de machine, les descriptions de machine (5) et les données d'application de la machine (2), comprenant au moins une banque de données (15) pour les valeurs caractéristiques de capteur, les descriptions de capteur (6) et les données d'application du capteur (3), et comprenant au moins une banque de données (15) pour les données d'application et les descriptions d'application (7) d'une application pour la machine (2).

2. Procédé selon la revendication 1,
**caractérisé en ce que** des profils d'utilisateur (8) des utilisateurs de la machine, comprenant leur niveau en ce qui concerne la formation, l'expérience et les capacités relatives à la machine (2), sont lus, et l'établissement automatique et dynamique de l'appréciation des risques (13) est effectué sur la base des profils d'utilisateur (8).

3. Procédé selon l'une au moins des revendications précédentes 1 à 2, **caractérisé en ce que** des données d'entrée (14) pour le système (1) sont formalisées, et les données d'entrée (14) sont codées au moyen de langages formels ou semi-formels, et le système (1) est conçu pour lire les données d'entrée (14).

4. Procédé selon l'une au moins des revendications précédentes 1 à 3, **caractérisé en ce que** des mesures de réduction des risques sont saisies et vérifiées cycliquement, et les mesures de réduction des risques sont adaptées cycliquement.

5. Système (1) comprenant au moins une machine (2) et au moins un dispositif de protection, un capteur (3) ou un système capteur pour la sécurisation de la machine (2) en termes de sécurité,
le système (1) étant conçu pour mettre en oeuvre le procédé selon l'une des revendications précédentes 1 à 4.
